# EUROPEAN PATENT APPLICATION

(11) **EP 3 881 734 A1**
(43) Date of publication of application: **22.09.2021**
(21) Application number: 19884022.5
(22) Date of filing: 01.08.2019
(51) Int. Cl.: A47J 36/16, A47J 43/044, A47J 43/07, A47J 43/08

(54) **UTENSIL FOR COOKING RISOTTO OR CREAMY RICE**

(30) Priority: 12.11.2018 ES 201831087
(71) Applicant: González Fernández, Isabel Mª, 41013 Sevilla (ES)
(72) Inventor: PINEDA RIVERA, Carlos Alberto, 41013-Sevilla (ES)
(74) Representative: Tribalyte Ideas
(86) International application number: PCT/ES2019/070549
(87) International publication number: WO 2020/099693

(57) **Abstract**

This invention provides a cooking utensil (1) comprising a support (2), a motor (3) and a plurality of blades (4). The support (2) comprises an anchoring means (21) suited for the anchoring thereof to a cooking vessel (100). The plurality of blades (4) are connected directly or indirectly to the motor (3) by means of a rotary shaft, in such a way that the motor (3) is configured to move the blades (4) directly or indirectly. Each of the blades (4) lies contained in a plane that intersects the rotary shaft of the motor (3) at a single point.

## Description

### TECHNICAL FIELD

This invention belongs to the technical field of cooking utensils, particularly of lids or accessories used with pots or pans.

### BACKGROUND OF THE INVENTION

When preparing various dishes, there are some recipes which require the cook's constant attention during preparation. In some cases this involves mere supervision with some sporadic action, but in other cases constant food stirring action is required so that the food does not stick to the vessel or become ruined.

There are all-in-one kitchen appliances that perform these tasks automatically, where intervention of the cook during the entire process is unnecessary. These all-in-one kitchen appliances are complex and expensive and allow different recipes to be prepared without the cook having to intervene.

The invention seeks to provide a simple and cost-effective alternative that can be used at the professional or domestic level, which allows different dishes to be prepared without the cook's constant intervention, but without the need to use a complex appliance.

### DESCRIPTION OF THE INVENTION

This problem is solved by means of a utensil according to claim 1. The dependent claims define preferred embodiments of the invention.

Unless otherwise defined, both the scientific and the technical terms used herein must be interpreted as one skilled in the art would interpret them.

Herein, the terms "comprises", "comprising", etc., are not meant to be interpreted in an exclusive sense but rather as considering the possibility that what is described may include further features in addition to those defined.

Therefore, in a first inventive aspect, the invention proposes a cooking utensil comprising
a support comprising an anchoring means suited for the anchoring thereof to a cooking vessel;
a motor;
a plurality of blades connected directly or indirectly to the motor, in such a way that the motor is configured to move the blades directly or indirectly by means of a rotary shaft;
wherein each of the blades lies contained in a plane that intersects the rotary shaft of the motor at a single point.

This utensil allows better stirring of the food as a result of the configuration of its blades, since it assures the stability of the blades and the correct transmission of the rotational movement regardless of the size of the vessel in which it is introduced.

In particular embodiments, the blades comprise a plurality of longitudinal members arranged in the form of a grating defining a plurality of closed holes the surface of which is greater than 4 cm².

These holes allow the passage of part of the food that is being stirred, improving the process of mixing and the homogenization of the result, without losing the capacity to continuously move the contents of the vessel. The size thereof allows the passage of small solid portions (such as mushrooms, chicken, shellfish) being prepared in the stew.

In particular embodiments, one of the longitudinal members is discontinuous, the discontinuous longitudinal member defining a plurality of open holes, the discontinuous longitudinal member being intended for being in contact with the cooking vessel.

This particular form allows better mixing of the rice and better flow through the utensil, obtaining a better result.

In particular embodiments, each of the blades lies contained in a plane which is not parallel or perpendicular to the rotary shaft of the motor, and particularly forms between 20 and 70° with respect to said shaft.

This configuration allows saving energy when the content to be mixed is very dense, since an arrangement with a certain angle with respect to the vertical acts in a much gentler manner on the mass to be stirred, reducing the resistance to forward movement.

In particular embodiments, the anchoring means are articulated with respect to the support.

Articulated means allow the utensil to be adapted to a wide range of vessels and surface finishes, being able to carry out the anchoring in various manners, depending on the vessel to be used.

Furthermore, in particular embodiments, these anchoring means comprise interchangeable magnets, in such a way that they can carry out their function regardless of the material from which the vessel is manufactured.

In particular embodiments, the support and the motor are coated with food-grade silicone.

On one hand, the electronic components of the utensil are protected and cleaning is favored, while at the same time the utensil is sanitized with respect to contact with the ingredients of the vessel.

In particular embodiments, the anchoring means are adjustable in extension, in such a way that the utensil is configured for the anchoring thereof to different sized vessels.

In particular embodiments, each blade comprises an additional horizontal element slidable with respect to the corresponding blade, which allows the longitudinal dimension of the blades to be adjusted in such a way that the blades are configured for having a longitudinal dimension adaptable to different sized vessels. The additional horizontal element can slide with respect to the retracted configuration of the blade, in such a way that, should it be necessary, they can be adjusted to the required length.

In particular embodiments, each blade comprises an additional vertical element slidable with respect to the corresponding blade, which allows the vertical dimension of the blades to be adjusted in such a way that the blades are configured for having a vertical dimension adaptable to different sized vessels. The additional vertical element can slide with respect to the retracted configuration of the blade, in such a way that, should it be necessary, they can be adjusted to the required height.

In particular embodiments, the blades are connected to a height-adjustable shaft. This regulation allows the base of the blades to be able to touch the base of the vessel at all times regardless of the height at which the support is placed.

In particular embodiments, the motor is configured for operating at different rotational speeds. The adjustment of the rotational speed is important for being able to adapt the operation to a wide range of dishes to be cooked.

In particular embodiments, the utensil further comprises a lid, which may optionally have one or more holes for the outlet of steam.

This supporting embodiment with a lid is suitable when the dish to be prepared needs a closed atmosphere, for example steam cooking.

In particular embodiments, the blades are connected to the motor by means of a shaft parallel to the rotary shaft of the motor.

In some cases, the power is transmitted directly, by means of a shaft coming out of the motor and to which the blades are fixed.

In particular embodiments, the blades are connected to the motor by means of a rack and pinion mechanism.

In other cases, the shaft of the motor is not located in the center of the support, so the transmission can likewise be effectively performed by means of a rack and pinion mechanism; the pinion is moved by the shaft of the motor and the rack is integral with the blades, in such a way that the rotation of the motor is effectively transmitted to the blades.

In particular embodiments, the utensil further comprises a guide containing the rack. This prevents the lid from being able to be moved when rotation between the pinion and the rack occurs.

In particular embodiments, the motor has a wireless connection which allows it to be switched on and off remotely, as well as messages to be sent regarding the operating state of the utensil.

### BRIEF DESCRIPTION OF THE DRAWINGS

To complete the description and for better understanding of the invention, the following set of figures is provided. Said figures are an integral part of the description and illustrate one or several particular examples which should not be interpreted as restricting the scope of protection of the invention, but rather simply as particular examples of how the invention can be carried out. This set comprises the following figures:
Figures 1a and 1b show plan and perspective views of a first particular embodiment of the cooking utensil according to the invention.
Figures 2a and 2b show plan and perspective views of a second particular embodiment of the cooking utensil according to the invention.
Figures 3a and 3b show constructive details of the blades belonging to particular embodiments of a cooking utensil according to the invention.
Figures 4a and 4b show examples of utensils according to the invention installed in vessels.

### PREFERRED EMBODIMENT OF THE INVENTION

Particular embodiments are described in sufficient detail for one skilled in the art to be able to implement the systems and methods being described. It is important to understand that said particular embodiments can be provided in alternative manners, without being limited to the particular features described below.

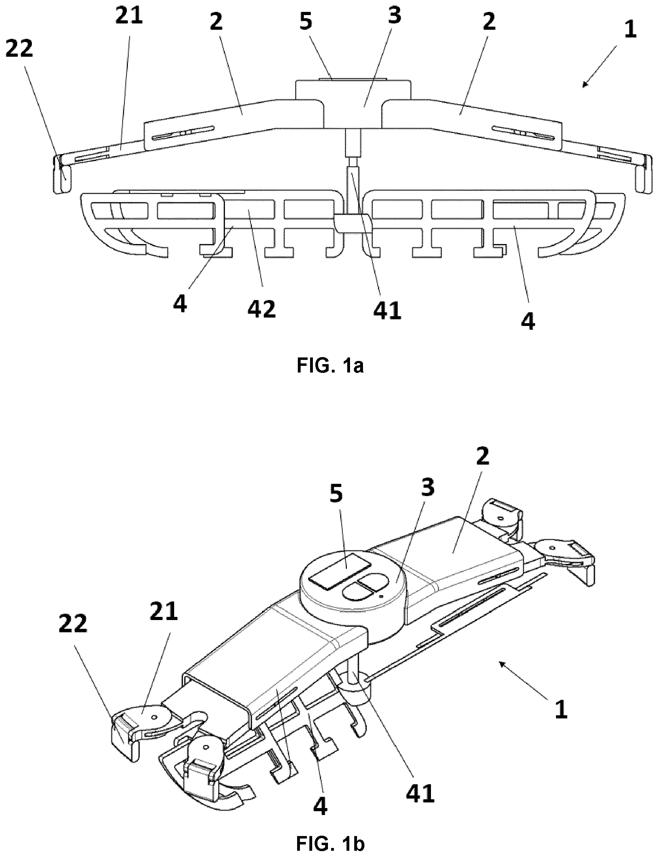

Figures 1a and 1b show plan and perspective views of a first particular embodiment of the cooking utensil 1 according to the invention.

This utensil 1 comprises a support 2, a motor 3, and blades 4. The support 2 and the motor 3 are coated with food-grade silicone. Furthermore, it also comprises a data processing element 5.

The support 2 comprises hooks 21 with magnets 22, which are suited for the anchoring thereof to a cooking vessel, such as a pan or a frying pan. These hooks 21 are articulated with respect to the support 2 and their length is adjustable, in order to achieve greater compatibility with the different cooking vessels that may be used, both in diameter and in shape. Furthermore, the magnets 22 can be of several interchangeable types so as to be adapted to the different materials from which the cooking vessels can be manufactured.

The blades 4 are connected to the motor 3 by means of a vertical shaft 41. This vertical shaft 41 transmits the rotational movement of the motor to the blades, in such a way that the motor is configured to move the blades with rotational movement when put into operation. This vertical shaft 41 is height-adjustable, in such a way that the height of the blades can be adjusted before putting the utensil into operation, thus being able to be adapted to vessels with different depths, without losing the capacity to stir the food located at the base of said vessel.

This vertical shaft 41 is parallel to the rotary shaft of the motor 3, in such a way that the movement is transmitted without the need for auxiliary connections or gears.

The motor 3 is configured for operating at different rotational speeds, and the speed may be changed during operation.

In this embodiment, the blades 4 comprise closed holes 42 having a substantially rectangular shape which allow the passage of the food therethrough, in such a way that not only is suitable stirring achieved, but so is a mixing thereof. The surface of each hole is greater than 4 cm². The passage of small pieces of ingredients that may be added to the rice is thereby allowed, without causing blockages in the utensil.

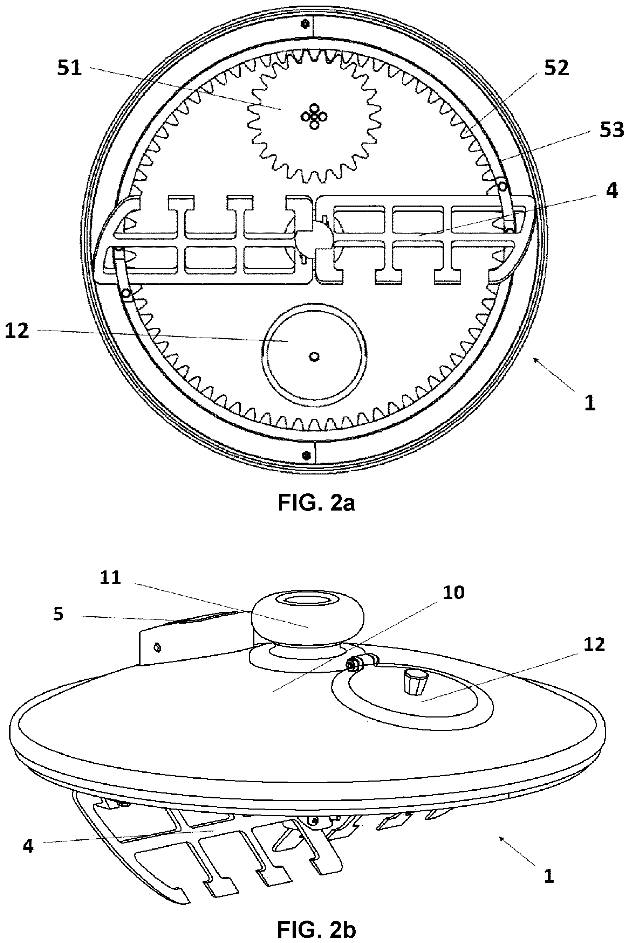

Figures 2a and 2b show plan and perspective views of a second particular embodiment of the cooking utensil 1 according to the invention.

In this case, in addition to the motor and the blades 4, the cooking utensil 1 comprises a lid 10 acting as a support. This lid 10 is suited for the preparation of certain food. Furthermore, in this case, the lid 10 comprises a handle 11 and a ventilation hole 12 for the outlet of steam.

In this case, the motor 3 has been displaced from the center of the utensil 1, so a vertical shaft directly connecting the motor with the blades has not been used. The solution adopted in this example comprises the use of a rack 52 and pinion 51 mechanism. The pinion 51 is integrally attached to the shaft of the motor, in such a way that it is operated by the motor 3, while the rack 52 is integrally attached to the blades 4, in such a way that the rotational movement of the motor is effectively transmitted to the blades 4. The rack 52 is introduced in a guide 53 of the lid 10 to prevent the lid 10 from sliding and moving due to the torque exerted by the motor 3.

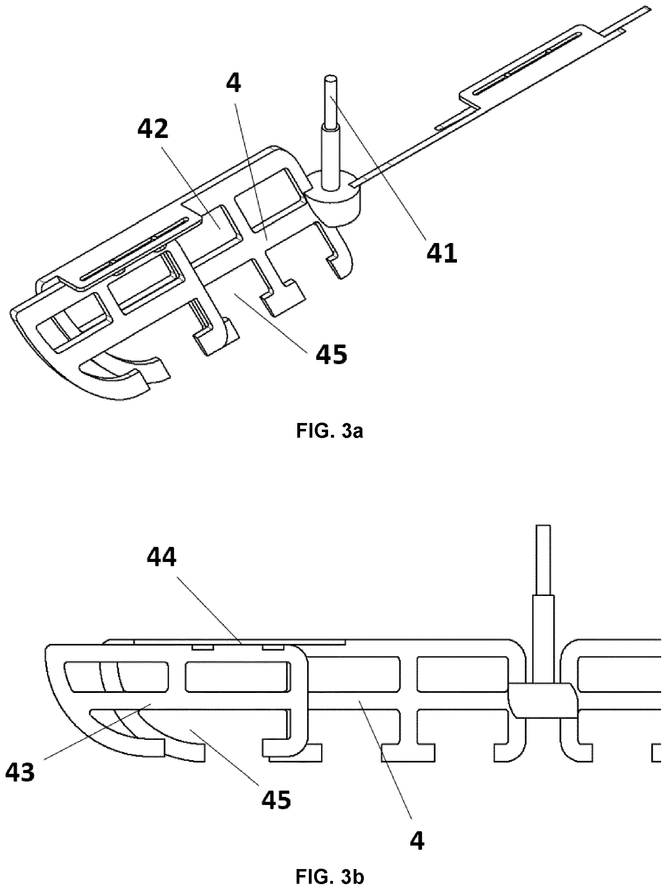

Figures 3a and 3b show constructive details of the blades in particular embodiments of the inventions.

On one hand, the different orientations the blades 4 may take are observed in Figure 3a. Each of these blades 4 are contained in planes intersecting the vertical rotary shaft of the motor 41. In this particular case, these are furthermore planes that are not perpendicular or parallel to the vertical shaft 41. They are inclined planes between 20 and 70° which help in the preparation of the ingredients introduced in the vessel.

The geometry of the holes comprised in the blades is also observed in this Figure 3a. The blades 4 comprise longitudinal members arranged in the form of a grating, forming a series of closed holes 42. Furthermore, the lower longitudinal member, intended for contacting with the surface of the frying pan, is discontinuous, so it forms a series of open holes 45. These open holes 45 located in the lower part allow the passage of small pieces of ingredients located at the base, facilitating stirring and preventing blockages.

On the other hand, the possibilities of adjusting the dimensions of the blades for the purpose of facilitating the use of the utensil in vessels of different dimensions can be observed in Figure 3b.

In this example, the blade 4 comprises extensions 43 which are configured for being driven along a forward movement rail 44 in such a way that the position thereof can be adjusted depending on the size of the vessel to be used. The horizontal extension 43 also comprises open holes 45 for respecting the design of the main blade 4.

Similarly, in embodiments belonging to the invention a similar guide could be installed in the vertical direction in such a way that the height of the blades may also be adjusted.

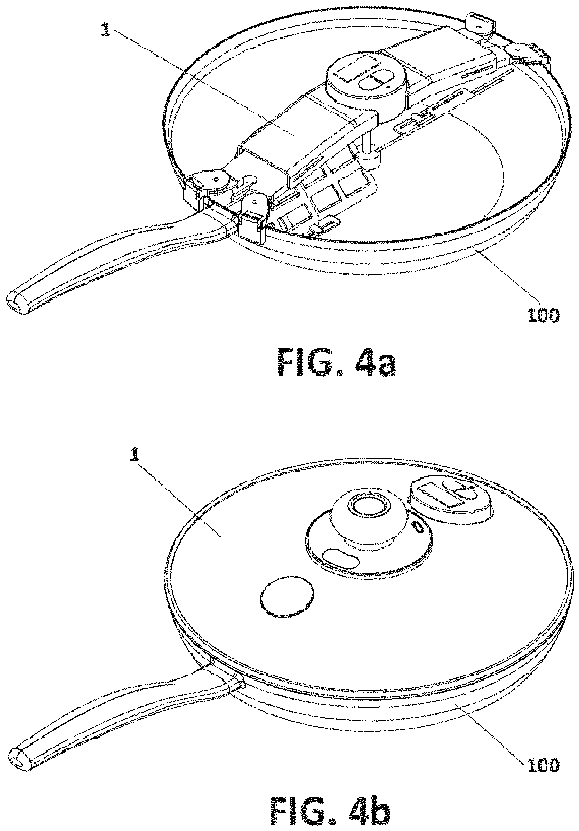

Lastly, Figures 4a and 4b show examples of a particular embodiment of a utensil 1 installed in vessels 100.

Figure 4a shows a first example of the utensil 1 when it is installed in a frying pan 100. The fact that the support is open allows cooking the ingredients exposed to air. A utensil such as the one described in Figures 1a and 1b could also be installed in this manner.

Figure 4b, in contrast, shows a second example of the utensil, like the one described in Figures 2a and 2b, when it is installed in a frying pan 100. Having a lid allows steam cooking the ingredients.

In both embodiments, the data processing element 5 includes a small display and controls for adjusting the time and the movement speed of the blades. Furthermore, this data processing element 5 allows connecting with the device to switch it on, switch it off, or to send or receive messages to or from a mobile device. The transmission of information, such as images or data about the process, is thereby allowed so that it may be published in social media and/or in a mobile application, as well as allowing for the control of the device from said mobile application.

## Claims

1. A cooking utensil (1) comprising
a support (2) comprising an anchoring means (21) suited for the anchoring thereof to a cooking vessel (100);
a motor (3);
a plurality of blades (4) connected directly or indirectly to the motor (3), in such a way that the motor (3) is configured to move the blades (4) directly or indirectly by means of a rotary shaft;
wherein each of the blades (4) lies contained in a plane that intersects the rotary shaft of the motor (3) at a single point.

2. The cooking utensil (1) according to claim 1, wherein the blades (4) comprise a plurality of longitudinal members arranged in the form of a grating defining a plurality of closed holes (42) the surface of which is greater than 4 cm².

3. The cooking utensil (1) according to claim 2, wherein one of the longitudinal members is discontinuous, the discontinuous longitudinal member defining a plurality of open holes (45), the discontinuous longitudinal member being intended for being in contact with the cooking vessel.

4. The cooking utensil (1) according to any of the preceding claims, wherein each of the blades (4) lies contained in a plane which is not parallel or perpendicular to the rotary shaft of the motor (3) and particularly forms between 20 and 70° with respect to said shaft.

5. The cooking utensil (1) according to any of the preceding claims, wherein the anchoring means (21) are articulated with respect to the support (2) and preferably comprise interchangeable magnets.

6. The cooking utensil (1) according to any of the preceding claims, wherein the support (2) and the motor (3) are coated with food-grade silicone.

7. The cooking utensil (1) according to any of the preceding claims, wherein the anchoring means (21) are adjustable in extension, in such a way that the utensil (1) is configured for the anchoring thereof to different sized vessels (100).

8. The cooking utensil (1) according to any of the preceding claims, wherein each blade comprises an additional horizontal element (43) slidable with respect to the corresponding blade, which allows the longitudinal dimension of the blades (4) to be adjusted, in such a way that the blades (4) are configured for having a longitudinal dimension adaptable to different sized vessels.

9. The cooking utensil (1) according to any of the preceding claims, wherein each blade comprises an additional vertical element slidable with respect to the corresponding blade, which allows the vertical dimension of the blades (4) to be adjusted, in such a way that the blades (4) are configured for having a vertical dimension adaptable to different sized vessels.

10. The cooking utensil (1) according to any of the preceding claims, wherein the blades are connected to a height-adjustable shaft (41).

11. The cooking utensil (1) according to any of the preceding claims, further comprising a lid (10).

12. The cooking utensil (1) according to claim 11, comprising one or more holes (12) for the outlet of steam.

13. The cooking utensil (1) according to any of the preceding claims, wherein the blades (4) are connected to the motor (3) by means of a shaft (41) parallel to the rotary shaft of the motor.

14. The cooking utensil (1) according to any of the claims 1 to 12, wherein the blades (4) are connected to the motor by means of a rack (52) and pinion (51) mechanism.

15. The cooking utensil (1) according to claim 13, further comprising a guide (53) containing the rack (52).

16. The cooking utensil (1) according to any of the preceding claims, wherein the motor comprises a wireless connection which allows it to be switched on and off remotely, as well as messages to be sent regarding the operating state of the utensil.
